# EUROPEAN PATENT APPLICATION

(11) **EP 2 497 747 A1**
(43) Date of publication of application: **12.09.2012**
(21) Application number: 10828210.4
(22) Date of filing: 25.10.2010
(51) Int. Cl.: C01B 33/025, F27B 3/08, F27B 3/28, F27D 11/08, H05B 7/148

(54) **METHOD AND APPARATUS FOR PRODUCING SILICON**

(30) Priority: 06.11.2009 JP 2009255254
(71) Applicant: Mitsubishi Chemical Corporation, Chiyoda-ku Tokyo 100-8251 (JP)
(72) Inventor: YAMAHARA Keiji, sakaide-shi, Kagawa 762-8510 Japan (JP); FUJIMOTO Hiromi, Sakaide-shi, Kagawa 762-8510 Japan (JP); KATAYAMA Toshiaki, Sakaide-shi, Kagawa 762-8510 Japan (JP)
(74) Representative: Vossius & Partner
(86) International application number: PCT/JP2010/068877
(87) International publication number: WO 2011/055650

(57) **Abstract**

Processes or apparatuses for producing silicon by a carbon reduction in an arc furnace using a raw silica material having an iron content, an aluminum content, a calcium content, and a titanium content of 0.1 % by mass or less, respectively and using a carbon material, wherein during the carbon reduction, an overcurrent which flows through an electrode of the arc furnace is mitigated using a power regulation unit or that the arc furnace is operated at a hearth power density PD (W/cm²) of 90 (W/cm²) or higher.

## Description

### Technical Field

The present invention relates to processes and apparatuses for producing high-purity silicon.

### Background Art

Solar cells have advantages that carbon dioxide emission per unit amount of electric power generated thereby is less and that no fuel for power generation is necessary. The demand for solar cells is growing in recent years. Single-junction solar cells which employ single-crystal silicon or polycrystalline silicon and have a pair of pn junctions are being mainly used among the solar cells currently in practical use, and the demand for silicon is growing as the demand for solar cells grows. The silicon to be used in solar cells is required to have a high purity from the standpoint of improving cell efficiency.

Various processes for producing silicon have been proposed. Among these is a process in which crude silicon is obtained by a carbon reduction using silicon dioxide and a carbon material. For example, in patent documents 1 to 4, silicon dioxide is thermally reduced in an electric furnace using a carbon material, thereby producing silicon.

In such production processes, carbon materials in general use, such as charcoal, metallurgical coke, petroleum coke, and coal which burns with a smoky flame, are suitably blended and used. However, these carbon materials contain volatile components and have an ash content.

Those carbon materials hence have a higher resistivity than high-purity carbon materials, enable the electrode lifting phenomenon to be avoided, and have made it easy to ensure a suitable distance between the end of the electrode and the bottom of the furnace. Furthermore, the volatile components of the carbon materials are pyrolyzed in the furnace to evolve hydrogen gas, carbon monoxide gas, and the like, and these gases ascend over a wide range toward the furnace surface and have served to accelerate the even dissipation of in-furnace gases within the arc furnace. In addition, there also have been cases where wood chips are incorporated in an amount of 10-20% by mass of the carbon materials for that purpose.

Those facts have indicated that if a high-purity carbon material is used, the electrode lifting phenomenon and the even dissipation of in-furnace gases cannot be avoided, making the operation of the furnace difficult.

### Prior-Art Documents

### Patent Documents

Patent Document 1: JP-A-57-111223
Patent Document 2: JP-A-60-200818
Patent Document 3: JP-A-61-117110
Patent Document 4: JP-A-62-260711

### Summary of the Invention

### Problems that the Invention is to Solve

In processes for silicon production using low-purity feed materials such as those described in patent documents 1 to 4, the silicon obtained is not considered to have a sufficiently high purity. There has been a desire for a process for producing silicon feed material which has a high purity and is more easily applicable to solar cells, etc.

The present inventors, under these circumstances, thought that high-purity silicon could be produced by using high-purity feed materials in silicon production in place of conventional low-purity feed materials such as those shown in patent documents 1 to 4.

That is, the inventors thought that high-purity silicon could be produced by using high-purity silicon dioxide and high-purity carbon, and made experiments in which silicon was actually produced in an arc furnace using such feed materials.

However, in the case where such high-purity feed materials were used to conduct the reaction, silicon carbide (SiC), which has high electrically conductive properties, was formed in accordance with, for example, the following reaction scheme (1) and accumulated in the furnace. As a result, this silicon production has encountered a problem that abrupt changes in current (hunting) occur in which short-circuiting due to a contact between the silicon carbide and an electrode of the arc furnace and a decrease in current or the like due to elimination of the contact are repeated in a short period, and the hunting makes it impossible to stably operate the production apparatus.

SiO₂ + 3C → SiC + 2CO (1)

The invention has been achieved in view of those problems. A subject for the invention is to provide processes and apparatuses for producing silicon in which high-purity silicon can be produced and the apparatuses can be continuously operated without being stopped.

### Means for Solving the Problems

The present inventors diligently made investigations on conditions which rendered production of high-purity silicon possible and on conditions for stably and continuously operating a production apparatus without stopping the apparatus. The inventors elucidated such conditions in detail and thereby obtained the following findings.
(1) For stabilizing an operation of a production apparatus when silicon is produced using an arc furnace in which silicon carbide can be formed and accumulate, it is effective to stabilize the current or voltage by means of a power regulation unit (preferably a saturable reactor). Thus, even when silicon carbide is formed and accumulates in the arc furnace, the overcurrent which flows through an electrode as a result of a contact between the electrode and the silicon carbide can be mitigated, and the production apparatus becomes continuously operable.
(2) When a carbon reduction reaction is conducted in an arc furnace in the so-called submerged-arc mode and the arc furnace is regulated so as to have a hearth power density within a specific range or higher and is operated at a high power as different from the conventional matter of common knowledge, then the silicon carbide which has been formed is more effectively consumed and the short-circuiting which occurs as a result of a contact between an electrode of the arc furnace and the silicon carbide is inhibited, thereby enabling the production apparatus to be operated continuously. Furthermore, the high-power operation stabilizes the production apparatus under such conditions that an arc is intensively generated from the electrode, thereby enabling high-purity silicon to be produced efficiently.
(3) By operating an arc furnace at a high power and by using a power regulation unit, the high-power operation of the arc furnace can be more stably conducted and the arc from the electrode can be stabilized. Thus, high-purity silicon can be produced more efficiently.
(4) By providing the arc furnace with a transformer having a large capacity, the apparatus can be more stably operated at a high current.

The invention has been achieved on the basis of those findings. Namely, the invention provides the following.
1. A process for producing silicon by a carbon reduction in an arc furnace using a raw silica material having an iron content, an aluminum content, a calcium content, and a titanium content of 0.1% by mass or less, respectively and using a carbon material, wherein during the carbon reduction, an overcurrent which flows through an electrode of the arc furnace as a result of a change in a material present in the vicinity of the electrode and/or a change in material arrangement therein is mitigated using a power regulation unit.
2. The process for producing silicon according to item 1 above wherein the power regulation unit is a saturable reactor.
3. The process for producing silicon according to item 1 or 2 above wherein the carbon material has an ash content of 1.0% by mass or less.
4. The process for producing silicon according to any one of items 1 to 3 above wherein in the arc furnace, the electrode is buried in the raw silica material and the carbon material and an arc is generated from the electrode.
5. The process for producing silicon according to any one of items 1 to 4 above wherein the arc furnace is operated at a hearth power density PD (W/cm²) of 90 (W/cm²) or higher.
6. The process for producing silicon according to any one of items 1 to 5 above wherein the arc furnace is equipped with a transformer, the transformer having a capacity which is at least 1.5 times the operating power of the arc furnace, and a transformation is conducted with the transformer.
7. A process for producing silicon by a carbon reduction in an arc furnace using a raw silica material having an iron content, an aluminum content, a calcium content, and a titanium content of 0.1% by mass or less, respectively and using a carbon material, wherein the arc furnace is operated at a hearth power density PD (W/cm²) of 90 (W/cm²) or higher.
8. The process for producing silicon according to item 7 above wherein an electrode of the arc furnace is buried in the raw silica material and the carbon material, and an arc is generated from the electrode.
9. The process for producing silicon according to item 7 or 8 above wherein the carbon material has an ash content of 1.0% by mass or less.
10. The process for producing silicon according to any one of items 7 to 9 above wherein the quantity of electric current flowing through an electrode of the arc furnace is regulated by means of a saturable reactor.
11. The process for producing silicon according to any one of items 7 to 10 above wherein a transformation is conducted by means of a transformer having a capacity which is at least 1.5 times the operating power of the arc furnace.
12. An apparatus for producing silicon by a carbon reduction in an arc furnace using a raw silica material having an iron content, an aluminum content, a calcium content, and a titanium content of 0.1% by mass or less, respectively and using a carbon material, the apparatus being equipped with a power regulation unit for mitigating an overcurrent which flows through an electrode of the arc furnace by at least one of a material change and a material arrangement which are present in the vicinity of the electrode..
13. The apparatus for producing silicon according to item 12 above wherein the power regulation unit is a saturable reactor.
14. The apparatus for producing silicon according to item 12 or 13 above wherein the carbon material has an ash content of 1.0% by mass or less.
15. The apparatus for producing silicon according to any one of items 12 to 14 above wherein in the arc furnace, the electrode is buried in the raw silica material and the carbon material and an arc is generated from the electrode.
16. The apparatus for producing silicon according to any one of items 12 to 15 above wherein the arc furnace is operated at a hearth power density PD (W/cm²) of 90 (W/cm²) or higher.
17. The apparatus for producing silicon according to any one of items 12 to 16 above wherein the arc furnace is equipped with a transformer, the transformer having a capacity which is at least 1.5 times the operating power of the arc furnace.
18. An apparatus for producing silicon by a carbon reduction in an arc furnace using a raw silica material having an iron content, an aluminum content, a calcium content, and a titanium content of 0.1 % by mass or less, respectively and using a carbon material, wherein the arc furnace is operated at a hearth power density PD (W/cm²) of 90 (W/cm²) or higher.
19. The apparatus for producing silicon according to item 18 above wherein in the arc furnace, the electrode is buried in the raw silica material and the carbon material and an arc is generated from the electrode.
20. The apparatus for producing silicon according to item 18 or 19 above wherein the carbon material has an ash content of 1.0% by mass or less.
21. The apparatus for producing silicon according to any one of items 18 to 20 above which is further equipped with a saturable reactor, in which the quantity of electric current flowing through an electrode of the arc furnace is regulated by means of the saturable reactor.
22. The apparatus for producing silicon according to any one of items 18 to 21 above wherein the arc furnace is equipped with a transformer, the transformer having a capacity which is at least 1.5 times the operating power of the arc furnace.

### Effects of the Invention

According to one of the production processes of the invention, the current flowing through the apparatus during carbon reduction is stabilized by means of a power regulation unit, preferably, a saturable reactor. As a result, even when silicon carbide accumulates in the furnace, the apparatus can be continuously operated without being stopped. In addition, the arc generated from an electrode of the arc furnace can be stabilized, and high-purity silicon can be efficiently produced.

Furthermore, according to the other production process of the invention, an arc furnace is operated in the so-called submerged-arc mode, and the arc furnace is regulated so as to have a hearth power density within a specific range or higher and is operated at a high power. As a result, silicon carbide is inhibited from accumulating in the furnace. Consequently, the apparatus can be continuously operated without being stopped, and high-purity silicon can be efficiently produced.

### Brief Description of the Drawings

[Fig. 1] Fig. 1 is a view for illustrating a carbon reduction reaction of silicon dioxide which proceeds in an arc furnace.
[Fig. 2] Fig. 2 is a view for illustrating a silicon production apparatus according to the invention.
[Fig. 3] Fig. 3 is a chart for illustrating a process for silicon production according to the invention.
[Fig. 4] Fig. 4 (A) to (C) are charts showing fluctuations in current and voltage which occurred when an arc furnace was operated in Example 1.
[Fig. 5] Fig. 5 (A) to (C) are charts showing fluctuations in current and voltage which occurred when an arc furnace was operated in Comparative Example 1.

### Modes for Carrying Out the Invention

A first aspect of the invention resides in a process for producing silicon by a carbon reduction in an arc furnace using a raw silica material having an iron content, an aluminum content, a calcium content, and a titanium content of 0.1 % by mass or less, respectively and further using a carbon material, characterized in that during the carbon reduction, the overcurrent which flows through an electrode of the arc furnace as a result of a change in a material present in the vicinity of the electrode and/or a change in material arrangement therein is mitigated using a power regulation unit.

The term "vicinity of an electrode of the arc furnace" means a region which exerts a considerable influence on the current including arc discharge and contact electricity. It is usually preferred that the region should range from the surface of the electrode of the arc furnace to a distance of about 1.5×D (mm) therefrom, wherein D (mm) is the diameter of the electrode.

The term "material present in the vicinity of an electrode of the arc furnace" means silicon carbide (SiC), which has high electrical conductivity, that is formed mainly in accordance with the following reaction scheme (1). A contact between the silicon carbide and the electrode of the arc furnace is apt to result in short-circuiting, and an overcurrent becomes apt to flow through the electrode of the arc furnace.

SiO₂ + 3C → SiC + 2CO (1)

The term "power regulation unit" means a device with which the apparatus power can be regulated. Examples thereof include saturable reactors, current-limiting reactors, transistors, and thyristors. Preferred of these are saturable reactors. This is because saturable reactors have high resistance to overcurrent and overvoltage and are capable of accommodating heavy current.

As the carbon material for the carbon reduction, it is preferred that a carbon material having a high purity should be used from the standpoint of avoiding inclusion of impurities into the silicon to be obtained. Specifically, it preferred that the carbon material should have an ash content of 1.0% by mass or less, in particular, 0.6% by mass or less.

There is a possibility that use of a high-purity raw silica material and a high-purity carbon material might result in accumulation of silicon carbide and in short-circuiting within the furnace, etc. However, according to the production process of the invention, the apparatus can be stably and continuously operated even in such cases.

In the production process of the invention, it is preferred that in the arc furnace, the electrode should be immersed in the raw silica material and in the carbon material and an arc should be generated from the electrode.

The term "the electrode should be immersed in the raw silica material and in the carbon material" means that the electrode is inserted into the raw silica material and the carbon material so that at least some of the electrode is present under the upper surface of the feed materials. The electrode need not be in contact with the feed materials. By thus disposing the electrode, high-purity silicon can be more efficiently produced and the continuous operation of the apparatus is rendered easier.

In the production process of the invention, it is preferred that the arc furnace should be operated at a hearth power density PD (W/cm²) of 90 (W/cm²) or higher. The hearth power density is more preferably 95 (W/cm²) or higher.

This is because by regulating the hearth power density of the arc furnace so as to be within that range, silicon carbide accumulation is inhibited to render the continuous operation of the apparatus easier and high-purity silicon can be more efficiently produced.

The term "hearth power density PD" means the following. For example, in the case where the arc furnace is equipped with three electrodes (in the case where the electrodes are disposed parallel with each other toward the bottom of the furnace), the hearth power density PD is a value obtained by dividing the operating power P (W) by the sum of the areas of three circles each having a radius r (cm) which is 1/2 the distance between the electrode centers. Namely, PD = (P (W))/(3πr² (cm²)).

However, in the case where the three electrodes are not equal in electrode center distance, the hearth power density PD is a value obtained by determining the areas of three different circles which correspond to the respective electrodes and which each has a radius that is the average of the center-to-center distances and dividing the operating power P (W) by the total area of the three circles.

Namely, PD = (P (W))/(πr₁²+πr₂²+πr₃²), wherein r₁ is the average (cm) of the center-to-center distance between electrode 1 and electrode 2 and the center-to-center distance between electrode 1 and electrode 3, and r₂ and r₃ are the averages (cm) of center-to-center distances determined in the same manner with respect to electrode 2 and electrode 3, respectively.

In the case where the arc furnace is equipped with two electrodes (in the case where the electrodes are disposed parallel with each other toward the bottom of the furnace), the hearth power density PD is a value obtained by dividing the operating power P (W) by the sum of the areas of two circles each having a radius r (cm) which is 1/2 the distance between the electrode centers. Namely, PD = (P (W))/(2πr² (cm²)).

In the case where the arc furnace has one electrode or where the arc furnace has two electrodes and the two electrodes are disposed so as to face each other (in the case where one serves as a counter electrode), the hearth power density PD is a value obtained by dividing the operating power P (W) by the sectional area S (cm²) of the electrode(s). When the two electrodes differ in sectional area, the smaller sectional area is taken as S (cm²).

In the production process of the invention, it is preferred that the arc furnace should be equipped with a transformer, which has a capacity that is at least 1.5 times the operating power of the arc furnace, and that a transformation should be conducted with this transformer. Namely, when the operating power is expressed by P (kW), the capacity of the transformer is preferably 1.5P (kVA) or higher, more preferably 2P (kVA) or higher, even more preferably 3P (kVA) or higher. This is because by increasing the capacity of the transformer, the arc furnace can be continuously operated without suffering a current breakage due to overcurrent.

A second aspect of the invention resides in a process for producing silicon by a carbon reduction in an arc furnace using a raw silica material having an iron content, an aluminum content, a calcium content, and a titanium content of 0.1 % by mass or less, respectively and further using a carbon material, wherein the arc furnace is operated at a hearth power density PD (W/cm²) of 90 (W/cm²) or higher.

A third aspect of the invention resides in an apparatus for producing silicon by a carbon reduction in an arc furnace using a raw silica material having an iron content, an aluminum content, a calcium content, and a titanium content of 0.1 % by mass or less, respectively and further using a carbon material, the apparatus being further equipped with a power regulation unit for mitigating the overcurrent which flows through an electrode of the arc furnace as a result of a change in a material present in the vicinity of the electrode and/or a change in material arrangement therein.

A fourth aspect of the invention resides in a process for producing silicon which is an apparatus for producing silicon by a carbon reduction in an arc furnace using a raw silica material having an iron content, an aluminum content, a calcium content, and a titanium content of 0.1 % by mass or less, respectively and further using a carbon material, wherein the arc furnace is operated at a hearth power density PD (W/cm²) of 90 (W/cm²) or higher.

The invention will be explained below in detail by reference to the drawings. However, the following explanations are for embodiments of the invention, and the invention should not be construed as being limited to the following embodiments unless the invention departs from the spirit thereof.

First, an explanation is given on chemical reactions which occur in an arc furnace when a carbon reduction reaction is conducted therein using silicon dioxide and a carbon material.

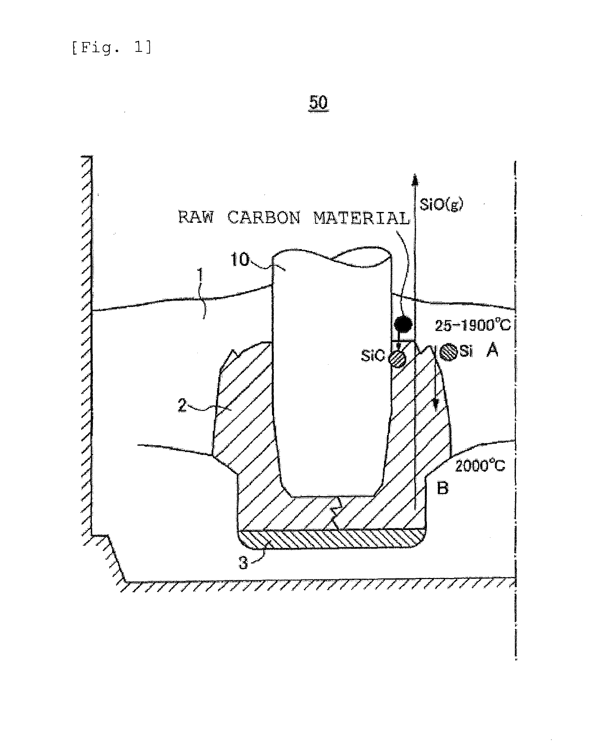

Fig. 1 is a view which is for illustrating a carbon reduction reaction of silicon dioxide conducted in an arc furnace 50, and in which attention is directed mainly to an end part of one electrode. In Fig. 1, details of the lining, etc. have been omitted.

As shown in Fig. 1, in the interior of the arc furnace 50, the end of an electrode 10 has been inserted into a feed-material layer 1 which includes a raw silica material and a carbon material. Namely, in the processes and apparatuses for silicon production according to the invention, the so-called submerged-arc mode is employed.

During an operation of the arc furnace 50, a layer 2 which contains SiO and CO is present in the feed-material layer 1 in the vicinity of the end of the electrode 10. Furthermore, the Si obtained as a result of the carbon reduction reaction within the furnace has accumulated beneath the layer 2 so as to form a liquid layer 3.

In the arc furnace 50, there is an upper low-temperature region around the area indicated by A in Fig. 1, and there is a lower high-temperature region around the area indicated by B in Fig. 1. The upper low-temperature region A preferably has a temperature of 25-1,900°C, and the lower high-temperature region B preferably has a temperature of 2,000°C or higher.

It is thought that different reactions are being preferentially taking place in the upper low-temperature region A and in the lower high-temperature region B.

Specifically, it is thought that in the upper low-temperature region A, the reactions shown by the following reaction schemes (2) and (3) are being preferentially taking place.

SiO(g) + 2C → SiC + CO(g) (2)

2SiO(g) → Si + SiO₂ (3)

Of the reactions shown by reaction schemes (2) and (3), the reaction shown by reaction scheme (2), in particular, is thought to be taking place most preferentially in the upper low-temperature region A. The upper low-temperature region A hence is thought to contain a large amount of silicon carbide yielded.

On the other hand, in the lower high-temperature region B, the reactions shown by the following reaction schemes (4) to (6) are thought to be taking place preferentially.

SiO₂ + C → SiO(g) + CO(g) (4)

SiO(g) + SiC → 2Si + CO(g) (5)

SiO₂ + SiC → Si + SiO(g) + CO(g) (6)

Of the reactions shown by reaction schemes (4) to (6), the reaction shown by reaction scheme (5), in particular, is thought to be taking place most preferentially in the lower high-temperature region B.

In the lower high-temperature region B, silicon is yielded, for example, by a reaction between the silicon carbide yielded in the upper low-temperature region A and gaseous silicon oxide.

When those reaction schemes are put together, it is considered that in the carbon reduction reaction of the raw silica material, silicon is yielded by the reaction shown by the following reaction scheme (7).

SiO₂ + 2C → Si + 2CO(g) (7)

The reaction scheme given above indicates that when, for example, the silicon carbide yielded in the upper low-temperature region A has poor reactivity, this silicon carbide accumulates in the furnace especially under the electrode, and, for example, comes into contact with the electrode 10 of the arc furnace, resulting in short-circuiting and making the operation of the arc furnace and the whole apparatus unstable.

There also is a possibility that the silicon carbide yielded in the upper low-temperature region A might come into contact with the electrode before moving to the lower region and this contact or the like might cause local short-circuiting, making the operation of the arc furnace and the whole apparatus unstable.

In particular, in case where silicon carbide has accumulated to such a degree that the accumulated silicon carbide pushes up the electrode, not only the apparatus cannot be stably operated continuously because of the short-circuiting but also the upper part of the furnace is excessively heated due to the elevated electrode position, resulting in an increased heat loss. In addition, the silicon oxide is excessively consumed and silicon carbide further accumulates in the furnace accordingly, resulting in a problem, for example, that the silicon melt tap hole formed in the sidewall of the furnace bottom part is clogged.

The invention provides production processes and production apparatuses in which the arc furnace and the whole apparatus can be stably operated continuously even when a material present in the vicinity of an electrode of the furnace has changed, in particular, even when silicon carbide has been formed or accumulated in the furnace, as described above.

A production apparatus 100 according to an embodiment of the invention is explained below, and a process for silicon production using this production apparatus 100 will be explained later.

### <Silicon Production Apparatus 100>

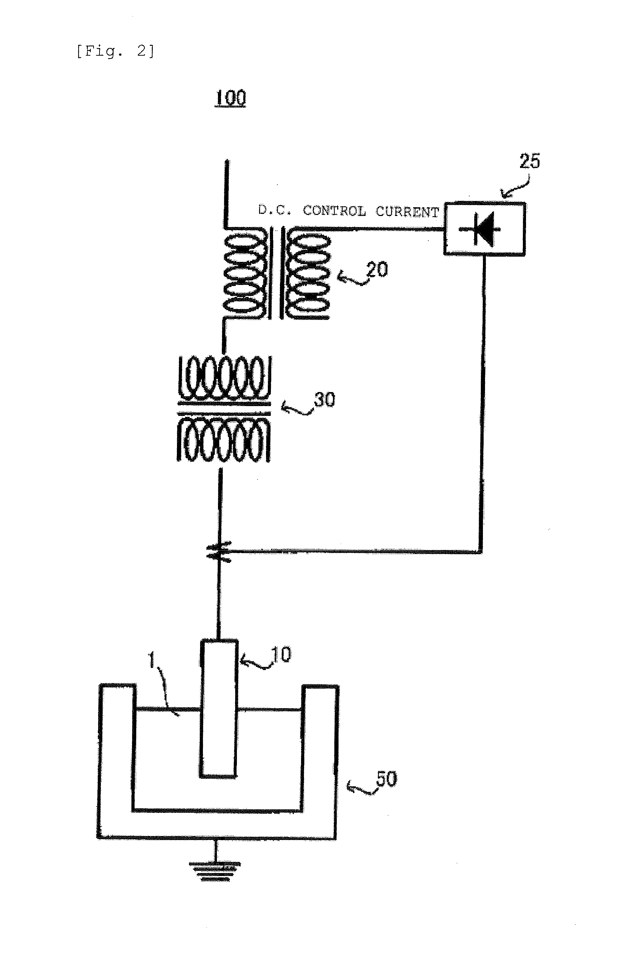

Fig. 2 is a diagrammatic view for illustrating a silicon production apparatus 100 according to one embodiment of the invention. As shown in Fig. 2, the silicon production apparatus 100 is equipped with an arc furnace 50 equipped with an electrode 10 inside, a power regulation unit 20 which stabilizes the current flowing through the electrode 10 of the arc furnace 50, and a transformer 30 disposed between the electrode 10 and the power regulation unit 20.

The interior of the arc furnace 50 has been filled with a raw silica material and a carbon material which constitute a feed-material layer 1, in which the end of the electrode 10 has been immersed. The electrode 10, the power regulation unit 20, and the transformer 30 have been electrically connected to each other. In Fig. 2, other wiring and the like have been omitted.

### (Feed-Material Layer 1: Raw Silica Material)

Examples of impurities generally contained in the raw silica material include iron, aluminum, calcium, and titanium, although the impurities vary depending on the kind of raw silica material.

The raw silica material to be used in the invention has an iron content, an aluminum content, a calcium content, and a titanium content (these metals are hereinafter referred to as major metallic impurities) of 0.1% by mass (1,000 mass ppm) or less each. The content of each major metallic impurity therein is preferably 0.01% by mass or less, more preferably 0.001 % by mass or less.

Furthermore, the total content of iron, aluminum, calcium, and titanium therein is preferably 0.1 % by mass or less, more preferably 0.01 % by mass or less, even more preferably 0.002% by mass or less.

By regulating the content of each major metallic impurity to 0.1% by mass or less, the purity of the crude silicon to be obtained through reduction can be improved, resulting in a decrease in the load to be imposed for impurity removal in a purification step. Furthermore, the yield of high-purity silicon can be improved.

The lower the content of each major metallic impurity, the more the raw silica material is preferred. The contents of the major metallic impurities are usually preferably 0.0001% by mass or higher, more preferably 0.0002% by mass or higher, from the standpoints of poor availability, cost, etc., although the contents thereof are not particularly limited.

The contents of boron and phosphorus in the raw silica material to be used in the invention are not particularly limited. However, the contents thereof each usually are preferably 10 mass ppm or less, more preferably 5 mass ppm or less, even more preferably 1 mass ppm or less, especially preferably 0.5 mass ppm or less, most preferably 0.1 mass ppm or less.

By regulating the contents of boron and phosphorus in the raw silica material to 10 mass ppm or less each, the purity of the crude silicon to be obtained through reduction can be improved, resulting in a decrease in the load to be imposed for impurity removal in a purification step. Furthermore, the yield of high-purity silicon can be improved.

The lower the contents of boron and phosphorus, the more the raw silica material is preferred. There is no particular lower limit on the contents thereof.

### (Feed-Material Layer 1: Carbon Material)

It is preferred that the carbon material to be used in the invention should be a carbon material having a high purity. The carbon material has an ash content of preferably 1.0% by mass or less, more preferably 0.6% by mass or less, even more preferably 0.1 % by mass or less, most preferably 0.04% by mass or less.

There is no particular lower limit on the ash content thereof. The lower the ash content, the better. However, the ash content thereof is usually preferably 0.0001 % by mass (1 mass ppm) or higher, more preferably 0.001% by mass or higher, from the standpoints of poor availability, cost, etc.

Ash content can be determined in accordance with JIS M8812. The contents of the major metallic impurities in the carbon material each usually are preferably 10 mass ppm or less, more preferably 6 mass ppm or less, even more preferably 4 mass ppm or less, especially preferably 2 mass ppm or less, most preferably 1 mass ppm or less.

The contents of boron and phosphorus in the carbon material are not particularly limited. However, the contents thereof each usually are preferably 50 mass ppm or less, more preferably 10 mass ppm or less, even more preferably 5 mass ppm or less, especially preferably 1 mass ppm or less, most preferably 0.5 mass ppm or less.

By using a carbon material in which the ash content and the boron and phosphorus contents are within the ranges shown above, silicon having a higher purity can be produced.

The raw silica material and carbon material described above have been charged from above the arc furnace in a given proportion and have been filled into the furnace to form a feed-material layer 1.

The ratio between the raw silica material and the carbon material in the feed-material layer 1 is not particularly limited, and may be the same as a ratio which has conventionally been applied in the case of producing silicon by carbon reduction reaction.

For example, the carbon material/raw silica material feed ratio (mass ratio) is usually preferably 0.3 or more, more preferably 0.33 or more. The feed ratio is usually preferably 0.5 or less, more preferably 0.4 or less, even more preferably 0.36 or less.

Some of the feed-material layer 1 becomes silicon through the carbon reduction reaction occurring in the furnace and accumulates on the bottom of the furnace, and this silicon is taken out in a liquid state, for example, through a melt tap hole (not shown) formed in the sidewall of a lower part of the arc furnace 50. The surface of the feed-material layer 1 gradually descends as the silicon is discharged, while fresh feed materials are charged from above the furnace.

### (Arc Furnace 50)

As the arc furnace 50 to be used in the invention, a conventionally known arc furnace can be applied without particular limitations. It is especially preferred that the arc furnace should have an inner diameter of 700-7,000 mm.

The interior of the arc furnace 50 is equipped with at least one electrode 10, and the end of this electrode 10 has been immersed in the feed-material layer 1. Namely, the so-called submerged-arc mode is employed.

It is preferred that the arc furnace 50 should be operated at a hearth power density PD (W/cm²) of preferably 90 (W/cm²) or higher, more preferably 95 (W/cm²) or higher, even more preferably 100 (W/cm²) or higher, especially preferably 105 (W/cm²) or higher. Furthermore, the arc furnace 50 is preferably operated at a hearth power density PD (W/cm²) of usually preferably 130 (W/cm²) or less.

In Table 1 is shown a relationship between hearth power density PD (W/cm²) and operating power P (kW) in an arc furnace according to a conventional electric furnace for ferrosilicon (silicon content, 77.1%).

**[Table 1]**

| Operating power (kW) | Hearth power density (W/cm²) |
|---|---|
| 1000 | 38.2 |
| 2000 | 55.6 |
| 3000 | 65 |
| 4000 | 70.5 |
| 5000 | 74.5 |
| 6000 | 77.8 |

As shown in Table 1, a comparison with the conventional hearth power densities shows that the operating conditions for the arc furnace to be applied in the invention require a far higher hearth power density than the operating conditions for the conventional arc furnace. Namely, it can be seen that the arc furnace in the invention is operated at a high power.

In the invention, by performing such a high-power operation, high-purity silicon can be efficiently produced and silicon carbide accumulation in the furnace is inhibited to enable the production apparatus 100 to be continuously operated without being stopped.

### (Power Regulation Unit 20)

The production apparatus 100 according to the invention is equipped with a power regulation unit 20. The quantity of electric current in the circuit is stabilized by means of the power regulation unit 20.

The power regulation unit 20 to be used in the invention is not limited so long as the unit is capable of power regulation. Examples thereof include saturable reactors, current-limiting reactors, transistors, and thyristors.

Preferred of these are saturable reactors from the standpoint that saturable reactors have high durability with respect to overcurrent and overvoltage and are capable of accommodating heavy current. With respect to stabilization of the quantity of current in the circuit, examples thereof include the following mode.

Namely, in the case where a saturable reactor is used as the power regulation unit 20 as shown in Fig. 2, the operating conditions of the arc furnace 50 (electrode current, etc.) are fed back to a saturable-reactor controller 25, and a D.C. control current is caused to flow from the controller in accordance with the operating conditions. Thus, the iron core disposed in the saturable reactor is changed in magnetic flux to cause a change in impedance. As a result, the quantity of current on the output side of the saturable reactor can be regulated and stabilized.

In the case where a saturable reactor is to be used as the power regulation unit 20, it is especially preferred to employ a saturable reactor having a capacity which is 100-10% of the capacity of the transformer.

Methods for connecting the power regulation unit 20 to the transformer 30 and the electrode 10 are not particularly limited so long as these components are connected into a configuration which is capable of regulating the current that flows through the electrode 10 of the arc furnace 50, etc. For example, the power regulation unit 20 can be serially connected to the transformer 30, and the transformer 30 can be connected to the electrode 10 by delta connection or star connection.

As stated above, there is a possibility that the electrode 10 of the arc furnace 50 might come into contact with the silicon carbide which is formed and accumulates in the furnace, thereby causing short-circuiting. Even in such a situation, however, the power regulation unit 20 suitably functions and can thus regulate and stabilize the quantity of electric current flowing through the electrode 10, etc., in the invention. Consequently, it is possible to continuously operate the production apparatus 100.

Furthermore, since the quantity of electric current can be stabilized by the power regulation unit 20 in the invention, an arc can be stably and intensively generated from the electrode 10 and high-purity silicon can be efficiently produced.

### (Transformer 30)

A transformer 30 has been disposed in the production apparatus 100 according to the invention. The transformer 30 has been connected so as to be located between the power regulation unit 20 and the arc furnace 50, and functions as a transformer for the furnace.

As the transformer 30, a conventional transformer can be used without particular limitations. It is, however, preferred to use a transformer having a high allowable current. Specifically, a transformer having an allowable current of 1,100 A (for furnaces operated at 100 kW) to 105,000 A (for furnaces operated at 20,000 kW) may be used.

It is especially preferred that a transformer 30 having a capacity which is at least 1.5 times the operating power of the arc furnace should be used for a transformation. Namely, when the operating power is expressed by P (kW), the capacity of the transformer is desirably 1.5P (kVA) or higher, preferably 2P (kVA) or higher, more preferably 3P (kVA) or higher.

As a result, even when a current flows through the transformer 30 in some degree of large quantity, the transformer 30 does not stop and the whole production apparatus 100 can be continuously operated without being stopped.

Methods for connecting the transformer 30 to the power regulation unit 20 and the electrode 10 are not particularly limited so long as these components are connected into a configuration which is capable of suitable transformation in the production apparatus 100. For example, the same configuration as in open-arc furnaces can be employed.

The production apparatus 100 according to the invention is equipped with a capacitor, a balancer, a distribution panel, a power transformer, etc., besides the components described above, so that voltage application to the arc furnace 50 is possible. Other configurations are not particularly limited, and the same configurations as conventional ones can be applied.

As described above, according to the silicon production apparatus 100 according to the invention, since the apparatus 100 is equipped with the power regulation unit 20, the quantity of electric current flowing through the electrode 10, etc. of the arc furnace 50 can be regulated and stabilized. Even in such a situation that silicon carbide has accumulated in the furnace and this can cause short-circuiting, it is possible to continuously operate the production apparatus 100.

Furthermore, by stabilizing the quantity of electric current by means of the power regulation unit 20, an arc can be stably and intensively generated from the electrode 10. Even when silicon carbide accumulates in the furnace, the overcurrent can be mitigated to enable the apparatus to be continuously operated without being stopped, and high-purity silicon can be efficiently produced.

On the other hand, by operating the arc furnace 50 at a high power, silicon carbide accumulation in the furnace can be inhibited to enable the production apparatus 100 to be continuously operated without being stopped, and high-purity silicon can be efficiently produced.

### <Process for Producing Silicon>

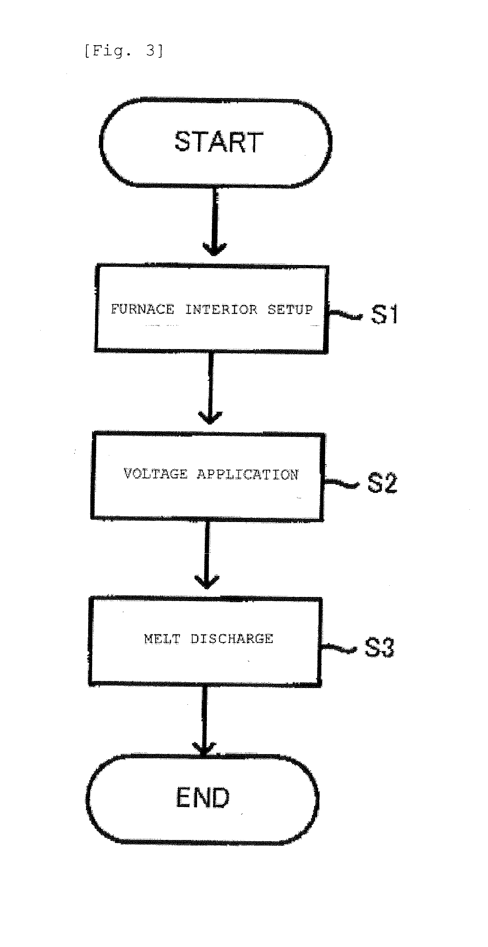

A process for silicon production according to the invention is conducted, for example, by means of the production apparatus 100 described above. The production process according to the invention includes the steps of furnace interior setup (step S1), voltage application (step S2), and melt discharge (step S3) as shown in Fig. 3, and a furnace interior chipping operation and the like are conducted after the furnace operation has been stopped.

### (Step S1)

Step S1 is a step in which an electrode 10 is attached to the arc furnace 50, and feed materials are charged into the furnace to fill the furnace with a feed-material layer 1, thereby setting up the interior of the furnace to bring the furnace into a state capable of silicon production. With respect to the proportions of the raw silica material and carbon material in the feed-material layer 1, these feed materials may have been charged in any proportions capable of suitable silicon production as described above. The end of the electrode 10 is immersed in the feed-material layer 1 in order to operate the furnace in the so-called submerged-arc mode.

### (Step S2)

Step S2 is a step in which after completion of the setup of the interior of the furnace, a voltage is applied to the arc furnace 50 to heat the interior of the furnace by arc discharge. The temperature of the furnace interior thus heated by arc discharge is not limited, and may depend on the arc discharge.

The quantity of electric current flowing in the arc furnace 50 is regulated and stabilized by the power regulation unit 20 disposed outside the arc furnace 50. Thus, even when reactions proceed within the feed-material layer 1 and the system comes into such a situation that the silicon carbide which has accumulated in the furnace comes into contact with the electrode 10 to cause short-circuiting, the electrode 10 and other devices are inhibited from suffering severe fluctuations in current (hereinafter referred to as current hunting) and the production apparatus 100 can be continuously operated without being stopped.

On the other hand, in step S2, the arc furnace 50 is operated at a hearth power density PD (W/cm²) of 90 W/cm² or higher. As a result, high-purity silicon can be efficiently produced and silicon carbide accumulation in the furnace can be inhibited to enable the production apparatus 100 to be continuously operated without being stopped.

### (Step S3)

The silicon which has been yielded by carbon reduction in the arc furnace 50 is liquid and gradually accumulates on the bottom of the furnace. Step S3 is a step in which such liquid silicon is taken out by discharging the silicon through a melt tap hole formed in the sidewall of the furnace bottom part.

As the silicon is taken out through the melt tap hole, the surface of the feed-material layer 1 within the furnace descends gradually. In the invention, a fresh raw silica material and a fresh carbon material are charged from above the furnace, for example, in accordance with the descent of the surface of the feed-material layer 1, thereby continuously conducting the carbon reduction reaction.

The silicon is thus taken out from the raw silica material by carbon reduction reaction through steps S1 to S3. The silicon may be taken out in the liquid state, or may be cooled and then taken out as a solid. Usually, however, it is preferred to take out the silicon as a solid. In the case where the silicon production is stopped, a furnace interior chipping operation and the like are conducted thereafter.

In the production processes of the invention, since a high-purity raw silica material and a carbon material are used and subjected to a carbon reduction reaction, it is possible to obtain high-purity silicon. Furthermore, the problems of overcurrent, short-circuiting, etc. which are caused by the use of a high-purity raw silica material and a carbon material are eliminated as described above, and silicon can be continuously produced.

### Examples

The processes and apparatuses for silicon production of the invention will be explained below in more detail by reference to Examples.

The silicon production apparatus 100 shown in Fig. 2 was used to conduct a production-apparatus continuous operation test. The operating conditions are shown in the following Table 2.

### (EXAMPLE 1 AND EXAMPLE 2)

Three electrodes having a diameter of 100 mm (electrodes A to C) were disposed in the furnace, and current control by the saturable reactor was conducted to produce silicon.

### (EXAMPLE 3)

Three electrodes having a diameter of 150 mm were disposed in the furnace, and current control by the saturable reactor was conducted to produce silicon. A hearth power density lower than in Example 1 and Example 2 was used.

### (COMPARATIVE EXAMPLE 1)

Three electrodes having a diameter of 100 mm (electrodes A to C) were disposed in the furnace, and silicon was produced without conducting current control by the saturable reactor.

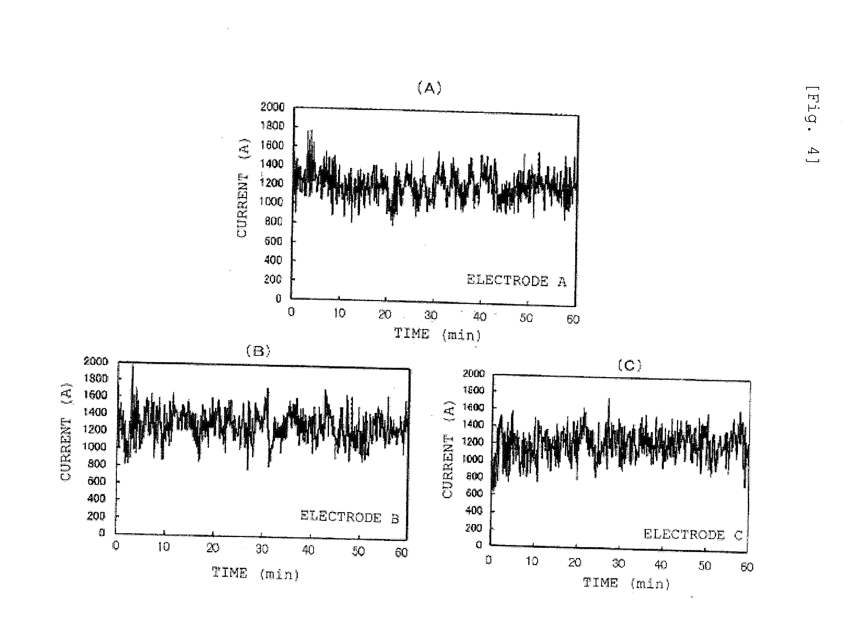

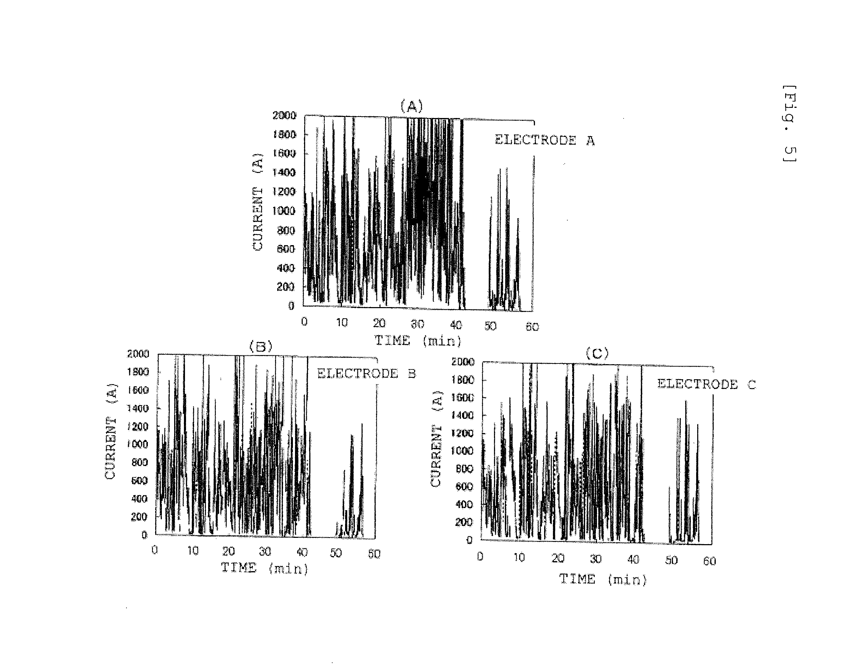

In Table 2 are shown the results concerning the state of the silicon carbide (SiC) which accumulated in the bottom part of the arc furnace and concerning the state of continuous operation. Furthermore, the results of the operation in Example 1 are shown in Fig. 4 (A) to (C), and the results of the operation in Comparative Example 1 are shown in Fig. 5 (A) to (C).

**[Table 2]**

| | Saturable reactor | Capacity of transformer (kVA) | Operating power (kW) | Diameter of electrodes (mm) | Distance between electrodes | Hearth power density (W/cm²) | Accumulation of SiC | Continuous operation |
|---|---|---|---|---|---|---|---|---|
| Example 1 | used | 300 | 105 | 100 | 220 | 92.1 | slight | satisfactory |
| Example 2 | used | 300 | 122 | 100 | 220 | 107 | extremely slight | satisfactory |
| Example 3 | used | 300 | 62.1 | 150 | 300 | 29.3 | considerable | possible |
| Comparative Example 1 | not used | 100 | 44.4 | 100 | 200 | 47.1 | considerable | impossible |

As shown in Table 2, it was found from a comparison between Examples 1 to 3 and Comparative Example 1 that in the case where the production apparatus 100 according to the invention is used to produce silicon, the current regulation of the arc furnace by the saturable reactor renders a continuous operation possible while preventing the arc furnace from being stopped by short-circuiting, even when silicon carbide has accumulated in the furnace.

It was found from a comparison between Examples 1 and 2 and Example 3 that by increasing the hearth power density, silicon carbide consumption is enhanced and silicon carbide accumulation in the furnace is reduced, making it possible to continuously operate the production apparatus more reliably.

Furthermore, a comparison between the detailed state of operation in Example 1 and that in Comparative Example 1 shows that when the production apparatus 100 according to the invention was used to produce silicon, the effect of inhibiting current hunting by the saturable reactor and the effect of inhibiting short-circuiting by a high-power operation were produced as apparent from Fig. 4 (A) to (C). Namely, the apparatus was able to be continuously operated in a suitable state, and silicon was able to be continuously produced.

On the other hand, in the case where silicon was produced without using the saturable reactor, silicon carbide accumulated in the furnace and the electrodes came into contact with the silicon carbide, resulting in short-circuiting and considerable current hunting, as apparent from Fig. 5 (A) to (C). The apparatus hence stopped intermittently, and silicon was unable to be continuously produced.

With respect to Example 1, the B, P, Fe, Al, Ti, Ca, Mg, and ash contents of the raw material, carbon material, and silicon obtained are shown in Table 3. The contents of B, P, Fe, Al, etc. in industrial silicon yielded by conventional processes are shown in Table 4 and Table 5. Incidentally, the carbon material/raw silica material feed ratio was 0.33.

Table 4 shows data according to Kato et al., Materia, Vol.41, No.1, pp.54-56 (2002). Table 5 shows data according to Aulich, H, Proceedings of the Flat-Plate Solar Array Project Worksh on Crystal Growth for High-Efficiency Silicon Solar Cells, 86-11, 267-278 (1985).

**[Table 3]**

| | B (µg/g) | P (µg/g) | Fe (µg/g) | Al (µg/g) | Ti (µg/g) | Ca (µg/g) | Mg (µg/g) | Ash content (mass %) |
|---|---|---|---|---|---|---|---|---|
| Raw silica material | <0.1 | <0.1 | 1.0 | 9.0 | 1.2 | 0.6 | 0.1 | - |
| Carbon material | 0.4 | <0.1 | 4.0 | 4.0 | 0.8 | 4.0 | 0.8 | 0.01 |
| Silicon yielded | 0.9 | 0.4 | 29.0 | 220.0 | 11.0 | 13.0 | 0.1 | - |

**[Table 4]**

| | B (µg/g) | P (µg/g) | Fe (µg/g) | Al (µg/g) | Ti (µg/g) |
|---|---|---|---|---|---|
| Industrial silicon | 5-10 | 25-30 | 1000-1500 | 600-800 | 150-200 |

**[Table 5]**

| | B (µg/g) | P (µg/g) | Fe (µg/g) | Al (µg/g) | Ti (µg/g) | Ca (µg/g) | Mg (µg/g) |
|---|---|---|---|---|---|---|---|
| Industrial silicon | 8-12 | 22-33 | 3000-4000 | 1400-1900 | 430-770 | 2100-2900 | 9-43 |

As apparent from Table 3 to Table 5, when a high-purity silica material and a high-purity carbon material were used for silicon production according to the invention, the yielded silicon obtained has far smaller impurity amounts than the conventional silicon. It was thus found that high-purity silicon can be produced according to the invention.

While the invention has been described in detail and with reference to specific embodiments thereof, it will be apparent to one skilled in the art that various changes and modifications can be made therein without departing from the spirit and scope thereof. This application is based on a Japanese patent application filed on November 6, 2009 (Application No. 2009-255254), the entire contents thereof being incorporated herein by reference.

### Industrial Applicability

According to the invention, high-purity silicon can be continuously and efficiently produced. The silicon obtained by the invention is suitable for use in solar cells, etc.

### Description of Reference Numerals

- 1: Feed-material layer
- 10: Electrode
- 20: Power regulation unit
- 30: Transformer
- 50: Arc furnace
- 100: Apparatus for silicon production

## Claims

1. A process for producing silicon by a carbon reduction in an arc furnace using a raw silica material having an iron content, an aluminum content, a calcium content, and a titanium content of 0.1 % by mass or less, respectively and using a carbon material, wherein during the carbon reduction, an overcurrent which flows through an electrode of the arc furnace is mitigated using a power regulation unit.

2. The process for producing silicon according to claim 1, wherein the power regulation unit is a saturable reactor.

3. The process for producing silicon according to claim 1 or 2, wherein the carbon material has an ash content of 1.0% by mass or less.

4. The process for producing silicon according to any one of claims 1 to 3, wherein in the arc furnace, the electrode is buried in the raw silica material and the carbon material and an arc is generated from the electrode.

5. The process for producing silicon according to any one of claims 1 to 4, wherein the arc furnace is operated at a hearth power density PD (W/cm²) of 90 (W/cm²) or higher.

6. The process for producing silicon according to any one of claims 1 to 5, wherein the arc furnace is equipped with a transformer, the transformer having a capacity which is at least 1.5 times the operating power of the arc furnace, and a transformation is conducted with the transformer.

7. A process for producing silicon by a carbon reduction in an arc furnace using a raw silica material having an iron content, an aluminum content, a calcium content, and a titanium content of 0.1 % by mass or less, respectively and using a carbon material, wherein the arc furnace is operated at a hearth power density PD (W/cm²) of 90 (W/cm²) or higher.

8. The process for producing silicon according to claim 7, wherein an electrode of the arc furnace is buried in the raw silica material and the carbon material, and an arc is generated from the electrode.

9. The process for producing silicon according to claim 7 or 8, wherein the carbon material has an ash content of 1.0% by mass or less.

10. The process for producing silicon according to any one of claims 7 to 9, wherein the quantity of electric current flowing through an electrode of the arc furnace is regulated by means of a saturable reactor.

11. The process for producing silicon according to any one of claims 7 to 10, wherein a transformation is conducted by means of a transformer having a capacity which is at least 1.5 times the operating power of the arc furnace.

12. An apparatus for producing silicon by a carbon reduction in an arc furnace using a raw silica material having an iron content, an aluminum content, a calcium content, and a titanium content of 0.1 % by mass or less, respectively and using a carbon material, the apparatus being equipped with a power regulation unit for mitigating an overcurrent which flows through an electrode of the arc furnace by at least one of a material change and a material arrangement which are present in the vicinity of the electrode.

13. The apparatus for producing silicon according to claim 12, wherein the power regulation unit is a saturable reactor.

14. The apparatus for producing silicon according to claim 12 or 13, wherein the carbon material has an ash content of 1.0% by mass or less.

15. The apparatus for producing silicon according to any one of claims 12 to 14, wherein in the arc furnace, the electrode is buried in the raw silica material and the carbon material and an arc is generated from the electrode.

16. The apparatus for producing silicon according to any one of claims 12 to 15, wherein the arc furnace is operated at a hearth power density PD (W/cm²) of 90 (W/cm²) or higher.

17. The apparatus for producing silicon according to any one of claims 12 to 16, wherein the arc furnace is equipped with a transformer, the transformer having a capacity which is at least 1.5 times the operating power of the arc furnace.

18. An apparatus for producing silicon by a carbon reduction in an arc furnace using a raw silica material having an iron content, an aluminum content, a calcium content, and a titanium content of 0.1 % by mass or less, respectively and using a carbon material, wherein the arc furnace is operated at a hearth power density PD (W/cm²) of 90 (W/cm²) or higher.

19. The apparatus for producing silicon according to claim 18, wherein in the arc furnace, the electrode is buried in the raw silica material and the carbon material and an arc is generated from the electrode.

20. The apparatus for producing silicon according to claim 18 or 19, wherein the carbon material has an ash content of 1.0% by mass or less.

21. The apparatus for producing silicon according to any one of claims 18 to 20, which is further equipped with a saturable reactor, in which the quantity of electric current flowing through an electrode of the arc furnace is regulated by means of the saturable reactor.

22. The apparatus for producing silicon according to any one of claims 18 to 21, wherein the arc furnace is equipped with a transformer, the transformer having a capacity which is at least 1.5 times the operating power of the arc furnace.
